(19) Europäisches Patentamt

European Patent Office

Office européen des brevets

(11) **EP 3 250 842 B1**

(12) **FASCICULE DE BREVET EUROPEEN**

(45) Date de publication et mention
de la délivrance du brevet:
**29.08.2018 Bulletin 2018/35**

(21) Numéro de dépôt: **16703577.3**

(22) Date de dépôt: **15.01.2016**

(51) Int Cl.:
**F16F 15/123** *(2006.01)*     **F16F 15/134** *(2006.01)*

(86) Numéro de dépôt international:
**PCT/FR2016/050079**

(87) Numéro de publication internationale:
**WO 2016/120542 (04.08.2016 Gazette 2016/31)**

(54) **AMORTISSEUR DE TORSION A RESSORTS DROITS**

TORSIONSDÄMPFER MIT GERADE SCHRAUBENFEDER

TORSIONAL DAMPER WITH STRAIGHT COIL SPRINGS

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité:  **26.01.2015  FR 1550564**

(43) Date de publication de la demande:
**06.12.2017  Bulletin 2017/49**

(73) Titulaire: **Valeo Embrayages
80009 Amiens Cedex 2 (FR)**

(72) Inventeurs:
• **VERHOOG, Roel
  60190 Gournay sur Aronde (FR)**
• **MIOT, Maxime
  80009 Amiens (FR)**

(56) Documents cités:
**FR-A1- 2 757 586     US-A- 4 679 678
US-A1- 2007 017 767**

## Description

### DOMAINE TECHNIQUE DE L'INVENTION

L'invention se rapporte à un amortisseur de torsion destiné à amortir les fluctuations de couple et/ou de vitesse entre deux organes tournants coaxiaux, et pouvant être intégré par exemple à un double volant amortisseur ou à un amortisseur à longue course.

### ETAT DE LA TECHNIQUE ANTERIEURE

Dans le document FR2652399 est décrit un amortisseur de torsion comportant un voile tournant autour d'un axe de révolution, situé entre deux rondelles de guidage tournant autour de l'axe de révolution par rapport au voile de part et d'autre d'une position angulaire médiane de référence dans un sens direct jusqu'à une position de fin de course directe et dans un sens rétrograde jusqu'à une position de fin de course rétrograde, et des ressorts travaillant en compression entre le voile et les rondelles de guidage. Les ressorts sont des ressorts à boudin droits à vide, qui travaillent suivant leur axe principal en compression. Pour ce faire, les extrémités des ressorts sont en appui contre des pièces articulées au voile et aux rondelles de guidage. À l'arrêt, les ressorts sont droits. À bas régime et faible couple, une flexion des ressorts s'amorce sous l'effet de la force centrifuge. Lorsque le couple transmis augmente, les ressorts sont progressivement comprimés jusqu'à atteindre une position de fin de course à spire jointive. Dans une telle hypothèse, la flexion des ressorts est annihilée et les spires du ressort sont sollicitées de façon relativement uniforme à fort couple, ce qui est favorable. Mais la géométrie de l'amortisseur limite le diamètre des ressorts de façon importante, et les performances en raideur sont faibles. Le document FR2757586 montre un amortisseur de torsion ayant toutes les caractéristiques du préambule de la revendication 1.

On peut alternativement utiliser des ressorts à boudin cintrés, disposés dans des fenêtres en arc de cercle. Les ressorts peuvent être cintrés au repos, ou au contraire avoir une forme droite à vide avant montage, et être cintrés lors du montage dans les fenêtres du voile, comme illustré par exemple dans le document FR 2 885 195. On peut alors augmenter le diamètre des ressorts. Mais les ressorts ne sont pas sollicités de façon uniforme, et l'on constate en pratique une hystérésis sur toute la course de compression, et notamment pour les forts débattements angulaires.

Il existe donc des contraintes de géométrie et de dimensionnement qui limitent la raideur des ressorts.

### EXPOSE DE L'INVENTION

L'invention vise à remédier aux inconvénients de l'état de la technique et à proposer un amortisseur de fluctuations de torsion offrant des performances améliorées et notamment une plus faible raideur à fort couple pour un diamètre extérieur donné.

Pour ce faire est proposé, selon un premier aspect de l'invention, un amortisseur de torsion comportant au moins un voile tournant autour d'un axe de révolution, au moins un ressort principal et au moins une rondelle de guidage. Le voile est pourvu d'au moins une fenêtre de logement délimitée par des parois incluant une paroi intérieure tournée radialement vers l'extérieur, une paroi extérieure concave tournée radialement vers l'intérieur et vers la paroi intérieure et deux parois d'extrémités, respectivement directe et rétrograde, s'étendant radialement entre la paroi intérieure et la paroi extérieure. Le ressort principal est un ressort à boudin droit à vide, logé dans la fenêtre, et comprenant deux portions d'extrémités incluant chacune une spire d'extrémité, et une portion intermédiaire comportant une ou plusieurs spires intermédiaires, et située entre les portions d'extrémité. La rondelle de guidage tourne autour de l'axe de révolution par rapport au voile, de part et d'autre d'une position angulaire médiane de référence dans un sens direct jusqu'à une position de fin de course directe et un sens rétrograde jusqu'à une position de fin de course rétrograde. La rondelle de guidage est pourvue d'au moins une face de butée directe et d'une face de butée rétrograde agencées de telle sorte que lorsque la rondelle de guidage s'éloigne de la position médiane de référence dans le sens direct, le ressort principal est comprimé entre la face de butée rétrograde et les parois de la fenêtre, et que lorsque la rondelle de guidage s'éloigne de la position médiane de référence dans le sens rétrograde, le ressort principal est comprimé entre la face de butée directe et les parois de la fenêtre du voile. L'amortisseur est tel qu'à l'arrêt, dans la position médiane de référence en l'absence de couple, au moins une des spires intermédiaires du ressort principal est en appui radial contre la paroi intérieure, de sorte que le ressort principal est cintré autour de l'axe de révolution, et que dans la position de fin de course directe, la face de butée rétrograde et la paroi d'extrémité directe de la fenêtre sont parallèles de sorte que le ressort principal est décintré, en appui contre la face de butée rétrograde et contre la paroi d'extrémité directe de la fenêtre du voile.

En cintrant le ressort autour de l'axe de révolution dans la position médiane de référence, on utilise au mieux le volume disponible et on peut accroître la longueur et la largeur du ressort par rapport à une disposition droite du ressort principal.

Le contact entre le ressort principal et la paroi intérieure de la fenêtre dans la position médiane de référence introduit un frottement, et rend certaines spires du ressort principal inopérantes sur une certaine plage angulaire autour de la position médiane de référence. On constate donc dans la plage angulaire où le contact a lieu un comportement qui n'est pas optimal, avec une raideur inférieure à celle du ressort complet et une hystérésis de fonctionnement. Mais ces effets ne sont sensibles que pour une plage angulaire correspondant à de faibles couples transmis, et ne sont donc pas pénalisants. De plus, ce frottement diminue lorsque la vitesse de rotation du moteur à combustion entraînant l'amortisseur de torsion augmente. En effet, le ressort subit alors une centrifugation qui favorise un décollement partiel du ressort au point de contact avec la paroi intérieure de la fenêtre, réduisant ainsi l'hystérésis de fonctionnement.

À l'approche de la position de fin de course directe, au contraire, la face de butée rétrograde et la paroi d'extrémité directe de la fenêtre du voile lui faisant face deviennent parallèles l'une à l'autre, ce qui provoque le redressement du ressort principal, et permet son fonctionnement optimal, dans la plage de fonctionnement correspondant aux couples élevés.

Dans la position de fin de course directe, la portion intermédiaire du ressort principal n'est de préférence en contact ni avec la paroi intérieure ni avec la paroi extérieure de la fenêtre. En l'occurrence, on peut définir une plage angulaire, entre d'une part une position intermédiaire entre la position médiane de référence et la position de fin de course directe, et d'autre part la position de fin de course directe, dans laquelle il n'y a plus de contact radial entre le ressort principal et la paroi intérieure de la fenêtre. Dans cette plage de fonctionnement au moins, correspondant aux forts couples, le ressort n'est plus entravé et agit sur toute sa longueur, d'où une raideur plus faible et une très faible hystérésis.

Suivant un mode de réalisation préféré, le ressort principal est cintré de telle manière que :

$$1\% \leq \frac{C}{L} \leq 11\%$$

et de préférence :

$$2\% \leq \frac{C}{L} \leq 5\%$$

où:

- L est la longueur d'une corde tirée entre une extrémité radialement intérieure de la spire d'extrémité d'une des portions d'extrémité et une extrémité radialement intérieure de la spire d'extrémité de l'autre des portions d'extrémité,

- C est la distance, mesurée dans un plan perpendiculaire à l'axe de révolution, entre la spire intermédiaire en appui radial contre la paroi intérieure et la corde.

Avantageusement, les spires du ressort principal à boudin sont jointives dans la position de fin de course directe. C'est ainsi le ressort principal lui-même qui définit la position de fin de course, sans qu'il soit nécessaire de prévoir d'autres butées de fin de course. Alternativement, on peut prévoir des butées de sur-couple sur la rondelle et le voile, ce qui permet de préserver un espacement minimal entre spires en position de fin de course, et évite de solliciter les spires en appui les unes contre les autres en cas de sur-couple.

De préférence, on fait en sorte que dans la position de fin de course directe, la portion intermédiaire du ressort principal ne soit en contact ni avec la paroi intérieure, ni avec la paroi extérieure de la fenêtre.

Suivant un mode de réalisation particulièrement avantageux, il existe une position de transition dans le sens direct, située entre la position angulaire médiane de référence et la position de fin de course directe, telle que lorsque la rondelle de guidage parcourt une course entre la position de transition et la position de fin de course directe, la portion intermédiaire du ressort principal n'est pas en contact avec la paroi intérieure de la fenêtre, la position de transition dans le sens direct étant située angulairement de préférence dans une plage comprise entre 20% et 50% de la course angulaire entre la position angulaire médiane de référence et la position de fin de course directe. Dans la plage de fonctionnement entre la position angulaire médiane de référence et la position de transition dans le sens direct, le ressort est cintré et en contact avec paroi intérieure.

Dans la position de fin de course directe, la face de butée rétrograde et la paroi d'extrémité directe de la fenêtre sont situées à égale distance de part et d'autre d'un plan radial, de préférence parallèles ou sensiblement parallèle au plan radial.

Suivant un mode de réalisation préféré, l'amortisseur est tel que dans la position médiane de référence, les portions d'extrémité du ressort principal sont en appui contre la paroi extérieure de la fenêtre.

Suivant un mode de réalisation préféré, l'amortisseur est tel que dans la position médiane de référence, les portions d'extrémité du ressort principal sont en appui contre la face de butée directe et contre la face de butée rétrograde.

De préférence, la paroi extérieure de la fenêtre du voile est en arc de cercle centré sur l'axe de révolution. La paroi extérieure joue ainsi un rôle de guidage du ressort principal, et notamment de ses portions d'extrémité sur l'ensemble de sa course.

Suivant un mode de réalisation préféré, la face de butée rétrograde et la face de butée directe font entre elles un angle de plus de 6°, et de préférence de plus de 9°, et de préférence de plus de 12°, mesuré dans un plan perpendiculaire à l'axe de révolution et par rapport à un sommet constitué par l'intersection du plan perpendiculaire à l'axe de révolution avec l'axe de révolution. De préférence, les faces d'extrémité de la fenêtre font entre elles un angle de plus de 6°, et de préférence de plus de 9°, et de préférence de plus de 12°, mesuré dans un plan perpendiculaire à l'axe de révolution et par rapport à un sommet constitué par l'intersection du plan perpendiculaire à l'axe de révolution avec l'axe de révolution. De préférence, l'amortisseur est tel que dans la position médiane de référence, la face de butée rétrograde fait avec la paroi directe de la fenêtre un angle de plus de 6°, et de préférence de plus de 9°, et de préférence de plus de 12°, mesuré dans un plan perpendiculaire à l'axe de révolution et par rapport à un sommet constitué par l'intersection du plan perpendiculaire à l'axe de révolution avec l'axe de révolution.

Suivant un mode de réalisation préféré, le fonctionnement de l'amortisseur de torsion est similaire dans le sens direct et dans le sens rétrograde. Dans la position de fin de course rétrograde, la face de butée directe est parallèle à la paroi d'extrémité rétrograde de la fenêtre. Le ressort principal est ainsi décintré, en appui contre la face de butée directe et contre la paroi d'extrémité rétrograde de la fenêtre. De préférence, la portion intermédiaire du ressort principal n'est en contact ni avec la paroi intérieure ni avec la paroi extérieure de la fenêtre dans la position de fin de course rétrograde. En l'occurrence, on peut définir une plage angulaire, entre d'une part une position de transition dans le sens rétrograde, intermédiaire entre la position médiane de référence et la position de fin de course rétrograde, et d'autre part la position de fin de course rétrograde, dans laquelle il n'y a plus de contact radial entre le ressort principal et la paroi radiale intérieure de la fenêtre. La position de transition dans le sens rétrograde est de préférence située angulairement dans une plage comprise entre 20% et 50% de la course angulaire entre la position angulaire médiane de référence et la position de fin de course directe. Dans la plage de fonctionnement entre la position angulaire médiane de référence et la position de transition dans le sens direct, le ressort est cintré et en contact avec paroi intérieure. De manière avantageuse, les spires du ressort principal à boudin sont jointives dans la position de fin de course rétrograde. Ainsi le ressort définit-il également la position de fin de course rétrograde, sans qu'il soit nécessaire de prévoir une butée supplémentaire. Alternativement, on peut prévoir des butées de sur-couple sur la rondelle et le voile, ce qui permet de préserver un espacement minimal entre spires en position de fin de course, et évite de solliciter les spires en appui les unes contre les autres en cas de sur-couple. Dans la position de fin de course rétrograde, la face de butée directe et la paroi d'extrémité rétrograde de la fenêtre sont parallèles à un plan radial et situées à égale distance de part et d'autre de ce plan radial.

Suivant un mode de réalisation préféré, le ressort principal a une longueur à vide L et un diamètre à vide D tels que L/D>2.

Pour augmenter la rigidité sur au moins une partie de la course angulaire, l'amortisseur de torsion peut comprendre au moins un ressort auxiliaire intérieur à boudin disposé à l'intérieur du ressort principal, ayant de préférence un sens d'enroulement inverse du ressort principal pour éviter tout coincement. Le ressort auxiliaire peut avoir la même longueur à vide que le ressort principal, auquel cas il est actif sur toute la course angulaire d'une position de fin de course à l'autre. Alternativement, il peut être sensiblement plus court que le ressort principal, et ne devenir actif qu'à partir d'une position angulaire décalée par rapport à la position médiane de référence. Suivant un mode de réalisation particulier, le ressort auxiliaire intérieur est un ressort droit à vide. On peut prévoir que dans la position médiane de référence, le ressort auxiliaire intérieur est bloqué en translation par le ressort principal, ce qui évite des jeux audibles entre les pièces à bas régime.

De préférence, la face de butée directe et la face de butée rétrograde sont fixes par rapport à un corps de la rondelle de guidage. En d'autres termes, on peut se passer avec le dispositif selon l'invention de zones d'appui articulées entre le ressort et la rondelle de guidage. Ceci simplifie considérablement la construction et évite certains modes de défaillances rencontrés dans l'état de la technique. Naturellement, la paroi directe de la fenêtre et la paroi rétrograde de la fenêtre sont également fixes par rapport à un corps du voile.

La face de butée directe et la face de butée rétrograde peuvent être réalisées directement sur le corps de la rondelle de guidage. Alternativement, on peut prévoir des butées solidaires de la rondelle de guidage et sur lesquelles sont formées l'une et/ou l'autre des faces de butée directe et de butée rétrograde. Ces butées rapportées peuvent être fixées par tout moyen approprié, par exemple par rivetage.

En pratique, l'amortisseur comporte deux rondelles de guidage solidaires l'une de l'autre, et situé axialement de part et d'autre du voile la butée directe et la butée rétrograde pouvant ou non être dupliquées sur les deux rondelles.

En pratique, l'amortisseur comporte plus d'un ressort. Ainsi, et suivant un mode de réalisation préféré, le voile tournant est pourvu d'au moins une deuxième fenêtre de logement, dans laquelle est logé un deuxième ressort principal à boudin, la rondelle de guidage étant pourvue d'au moins une deuxième face de butée directe et d'au moins une deuxième face de butée rétrograde agencées de telle sorte que lorsque la rondelle de guidage s'éloigne de la position médiane de référence dans le sens direct, le deuxième ressort principal est comprimé entre la deuxième face de butée directe et les parois de la deuxième fenêtre, et que lorsque la rondelle de guidage s'éloigne de la position médiane de référence dans le sens rétrograde, le deuxième ressort principal est comprimé entre la deuxième face de butée rétrograde et les parois de la deuxième fenêtre. L'amortisseur est tel qu'à l'arrêt, dans la position médiane de référence en l'absence de couple, au moins une des spires intermédiaires du deuxième ressort principal est en appui radial contre la paroi intérieure de la deuxième fenêtre, de sorte que le deuxième ressort principal est cintré autour de l'axe de révolution, et que dans la position de fin de course directe, la deuxième face de butée rétrograde et la paroi d'extrémité directe de la deuxième fenêtre sont parallèles de sorte que le deuxième ressort principal est décintré, en appui contre la deuxième face de butée rétrograde et contre la paroi d'extrémité directe de la deuxième fenêtre. Ceci vaut également par extension pour un nombre quelconque de fenêtres.

Suivant un mode de réalisation, l'amortisseur de torsion comprend un moyeu pourvu d'un flasque, le flasque comportant un rebord périphérique, une portion du rebord périphérique étant positionnée axialement entre la portion intermédiaire du ressort principal et la rondelle de guidage, ladite portion du rebord périphérique du flasque étant chanfreinée de façon à ne pas avoir de contact avec le ressort principal. Le chanfrein réalisé sur la dite portion du rebord périphérique du flasque présente l'avantage d'éviter un frottement supplémentaire lors de la compression du ressort. De cette manière, on utilise au mieux le volume disponible et on peut accroître la longueur et le diamètre du ressort par rapport à une disposition droite du ressort principal.

La rondelle de guidage est de préférence pourvue de trous de fixation parallèles à l'axe de révolution et répartis circonférentiellement pour le passage de rivets de fixation entre le flasque, la rondelle de guidage et une turbine d'entraînement de la rondelle de guidage, notamment dans l'hypothèse où l'amortisseur de torsion est destiné à être disposé en aval d'un convertisseur de couple comportant une telle turbine. Le flasque présente une face tournée vers la rondelle de guidage qui comporte des portions planes de soudage perpendiculaires à l'axe de révolution en regard de chacun des trous de fixation et une surface opposée à la rondelle de guidage, qui comporte des portions planes de contrôle perpendiculaire à l'axe de révolution, dans le prolongement axial du trou de fixation et des portions planes de soudage. Il est alors possible, lors de l'assemblage de l'amortisseur de torsion sur la turbine, d'insérer des rivets dans les trous de fixation, au contact des portions planes de soudage du flasque, puis de souder, par exemple par décharge de condensateur, les rivets au flasque, pour solidariser définitivement la turbine, la rondelle de guidage et le moyeu. À la suite de l'opération de soudage, un contrôle par de la qualité de la liaison soudée peut être effectué par ultrasons en apposant une sonde sur les portions de contrôle.

Avant d'être assemblé à la turbine, l'amortisseur de torsion constitue un ensemble cohérent.

Suivant un mode de réalisation, on peut prévoir de fretter l'un à l'autre la rondelle de guidage et le moyeu. On peut également prévoir un assemblage en force entre la rondelle de guidage et le moyeu au niveau des reliefs d'indexation. Le moyeu et la rondelle de guidage peuvent être pourvus de reliefs d'interverrouillage pour sécuriser la liaison avant l'assemblage à la turbine.

Alternativement, on peut assembler la rondelle de guidage et le moyeu avec un jeu fonctionnel de montage, notamment angulaire autour de l'axe de révolution et/ou axial parallèlement à l'axe de révolution, tout en prévoyant le cas échéant des reliefs d'indexation angulaire pour limiter le jeu fonctionnel angulaire et/ou des reliefs d'indexation axiale pour limiter le jeu fonctionnel axial. On définit ainsi un pré-positionnement entre le moyeu et la rondelle de guidage, de sorte que l'amortisseur de torsion constitue dans cette hypothèse également un sous-ensemble cohérent, avant sa fixation la turbine. Les reliefs d'indexation angulaire peuvent notamment comprendre une languette d'indexation aménagée sur la butée, coopérant avec un méplat formé sur la rondelle de guidage. Les reliefs d'indexation axiale peuvent être constitués par la rondelle de guidage et par une butée, solidaire de la rondelle de guidage, et matérialisant une au moins des faces de butée directe et rétrograde, le moyeu comportant un flasque comme décrit précédemment qui vient s'insérer dans un espace entre la butée et la rondelle de guidage. Suivant ce mode de réalisation, la fixation définitive du moyeu à la rondelle de guidage n'intervient que lorsque le flasque, la rondelle de guidage et une turbine d'entraînement de la rondelle de guidage sont soudés comme décrit précédemment.

Ce qui vient d'être décrit pour la fixation de l'amortisseur de torsion à une turbine de convertisseur de couple vaut également de manière analogue pour la fixation de l'amortisseur de torsion à un autre organe amont ou aval. L'amortisseur de torsion ainsi défini peut ainsi être intégré par exemple à un double volant amortisseur, ou constituer un étage d'un amortisseur à longue course, le voile ou la rondelle de guidage constituant une rondelle de phasage.

## BREVE DESCRIPTION DES FIGURES

D'autres caractéristiques et avantages de l'invention ressortiront à la lecture de la description qui suit, en référence aux figures annexées, qui illustrent :

- la figure 1, une vue isométrique éclatée d'un amortisseur de torsion suivant un mode de réalisation de l'invention;

- la figure 2, une vue isométrique d'une partie de l'amortisseur de torsion de la figure 1, une rondelle de guidage de l'amortisseur de torsion ayant été omise;

- la figure 3, une vue isométrique en coupe de l'amortisseur de torsion de la figure 1;

- la figure 4, une vue de face d'un détail d'une fenêtre de logement d'un voile de l'amortisseur de torsion de la figure 1, dans une position médiane de référence de l'amortisseur;

- la figure 5, une vue de face d'un détail d'une fenêtre de logement d'un voile de l'amortisseur de torsion de la figure 1, dans une première position intermédiaire de l'amortisseur, entre la position médiane de référence et une position de fin de course directe;

- la figure 6, une vue de face d'un détail d'une fenêtre de logement d'un voile de l'amortisseur de torsion de la figure 1, dans une deuxième position intermédiaire de l'amortisseur, entre la position médiane de référence et la position de fin de course directe;

- la figure 7, une vue de face d'un détail d'une fenêtre de logement d'un voile de l'amortisseur de torsion de la figure 1, dans la position de fin de course directe;

- la figure 8, une vue partielle de face d'une partie de l'amortisseur de torsion de la figure 1;

- la figure 9, une demi-section selon le plan de coupe IX de la figure 8;

- la figure 10, une demi-section selon le plan de coupe X de la figure 8;

- la figure 11, une demi-section selon le plan de coupe XI de la figure 8.

Pour plus de clarté, les éléments identiques sont repérés par des signes de référence identiques sur l'ensemble des figures.

**DESCRIPTION DÉTAILLÉE DE MODES DE REALISATION**

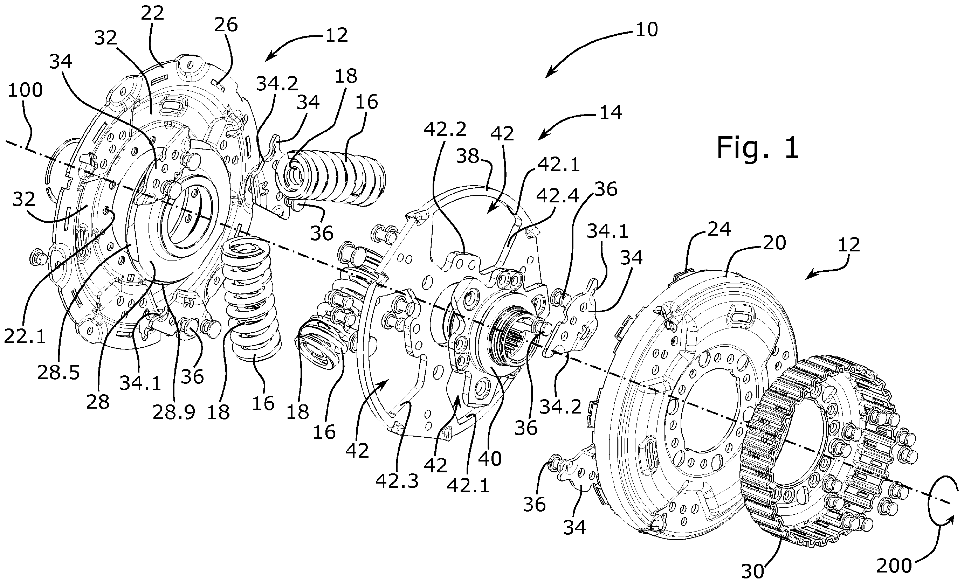

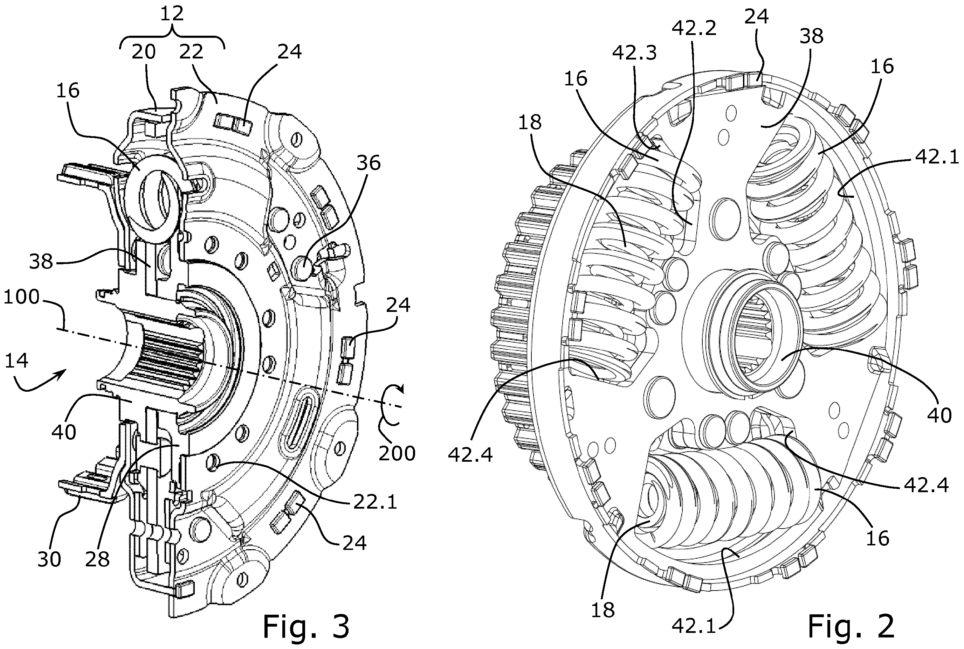

Sur les figures **1** à **3** est illustré un amortisseur de torsion **10** tournant autour d'un axe de révolution **100** et comportant un organe primaire **12** tournant, un organe secondaire **14** tournant autour de l'axe de révolution et par rapport à l'organe primaire **12,** et des ressorts **16, 18** positionnés circonférentiellement entre l'organe primaire **12** et l'organe secondaire **16.**

L'organe primaire **12** est ici composé de deux rondelles de guidages **20, 22** distantes l'une de l'autre le long de l'axe de révolution **100** et solidarisées l'une à l'autre par l'intermédiaire plots d'accrochage **24** formés sur l'une des rondelles **20,** prévus pour pénétrer dans des lumières **26** prévues à cet effet dans l'autre rondelle **22.** Dans l'application considérée, l'amortisseur **10** est destiné à être intégré à un convertisseur de couple. À cet effet, un moyeu **28** d'une turbine du convertisseur de couple est fretté dans l'une des rondelles **22.** L'autre rondelle **20** est quant à elle destinée à être fixée à un moyeu cannelé **30** constituant l'élément de sortie d'un embrayage de verrouillage du convertisseur de couple. Les faces intérieures des rondelles de guidage **20, 22** forment des renfoncements **32** en arcs toriques définissant des logements pour les ressorts **16, 18,** et séparés deux à deux par des butées **34** rapportées, fixées aux rondelles de guidage **20, 22** par des rivets **36.**

L'organe secondaire **14** est quant à lui composé d'un voile **38** positionné entre les rondelles de guidage **20, 22,** et d'un moyeu secondaire **40** fretté dans le voile **38** et destiné à être monté sur un arbre d'entrée d'une boîte de transmission étagée.

Le voile **38** est pourvu de fenêtres **42** de logement des ressorts **16, 18.** Chaque fenêtre **42** présente une paroi extérieure **42.1** sensiblement en arc de cercle, tournée radialement vers l'intérieur, une paroi intérieure **42.2** tournée radialement vers l'extérieur et faisant face à la paroi extérieure **42.1,** et deux parois latérales **42.3, 42.4** que l'on dénommera dans la suite directe et rétrograde, en référence à un sens direct **200** arbitraire de rotation du convertisseur **10,** qui correspondra par exemple à la marche avant du véhicule dans lequel le convertisseur **10** est destiné à être implanté.

Les ressorts **16, 18** sont montés par paires dans les fenêtres de logement **42,** guidés latéralement dans les renfoncements des rondelles de guidage **20, 22,** chaque paire comportant un ressort principal extérieur **16** et un ressort auxiliaire intérieur **18.** Les ressorts principaux et auxiliaires sont des ressorts à boudin droits à vide, c'est-à-dire avec un axe d'hélice rectiligne. Les ressorts auxiliaires **18** et les ressorts principaux **16** ont des sens d'hélices inversés, pour éviter des interférences non maîtrisées entre les spires des ressorts auxiliaires **18** et celles des ressorts principaux **16.** Les ressorts auxiliaires **18** sont le cas échéant plus courts à vide que les ressorts principaux **16.**

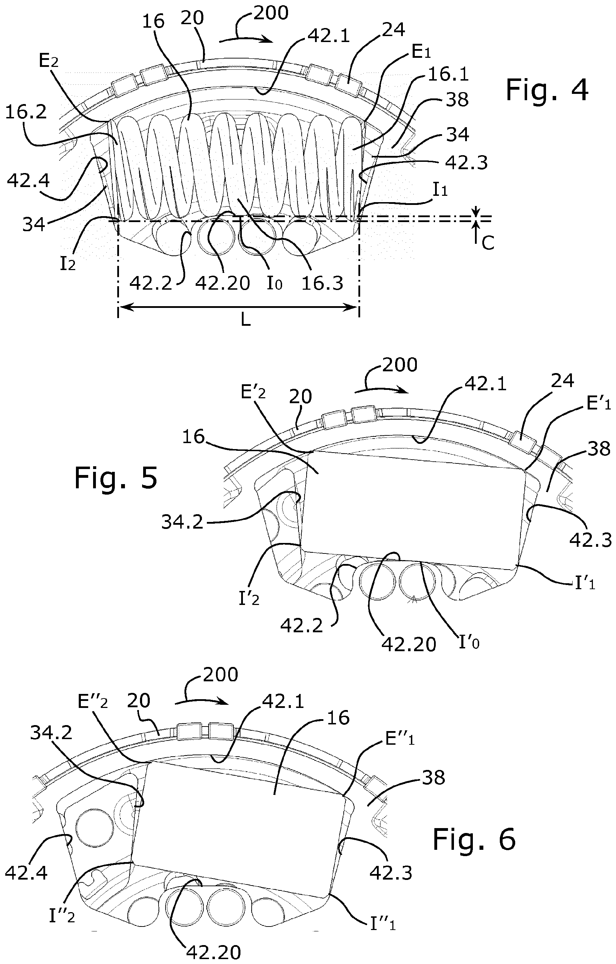

Sur les figures **4** à **7,** on a illustré l'encombrement d'un des ressorts principaux **16** dans diverses positions de l'amortisseur de torsion **10.** Sur ces figures, le sens direct **200** correspond au sens horaire. Le ressort principal **16** a des spires d'extrémités **16.1, 16.2** usinées de manière à définir des faces d'appui planes, qui de plus sont parallèles à vide avant insertion dans les fenêtres **42.** Sur la figure **4,** l'amortisseur de torsion **10** est dans une position médiane de référence, dans laquelle les spires d'extrémité **16.1, 16.2** du ressort principal sont en contact avec la paroi externe concave **42.1** de la fenêtre (point **E1**, **E2** sur la figure **4**), alors qu'une ou deux spires intermédiaires **16.3** du ressort principal **16** sont en contact avec la paroi intérieure **42.2** de la fenêtre (point **I0** sur la figure **4**). La géométrie de la fenêtre **16** est telle que les points **E1**, **E2** et **I0** imposent une flexion au ressort principal **16** qui se trouve cintré avec une concavité tournée vers l'axe de révolution **100.** Bien qu'il soit peu visible sur la figure **4,** ce cintrage correspond à un angle supérieur à 7° entre les faces d'appui du ressort principal, angle qui, dans des variantes de réalisation, peut varier par exemple entre 5° et 12° Alternativement, on peut caractériser le cintrage par la distance C, mesurée dans un plan perpendiculaire à l'axe de révolution **100,** entre la spire intermédiaire **16.3** et une ligne correspondant à la corde tirée entre l'extrémité radiale intérieure de la spire d'extrémité **16.1** et l'extrémité radiale intérieure de la spire d'extrémité **16.2.** La longueur de la corde étant notée L, le rapport C/L est de préférence compris entre 4% et 11%. En pratique, C est de l'ordre de 1 mm, de préférence, entre 0,8 mm et 2 mm.

On visualise également sur la figure **4** deux butées **34** qui encadrent le ressort principal **16,** l'une présentant une face de butée **34.1** dite directe (en avant du ressort dans le sens direct) et l'autre présentant une face de butée dite rétrograde **16.2** (en arrière du ressort dans le sens direct). Dans la position médiane de référence de la figure **4** et de manière purement optionnelle, les spires d'extrémité **16.1**, **16.2** du ressort principal **16** peuvent être ponctuellement en appui contre la face de butée directe **34.1** (au point référencé **I1** sur la figure **4**) et contre la face de butée rétrograde **34.2** (au point référencé **I2** sur la figure **4**). Alternativement, on peut prévoir que le ressort principal **16** dans la position médiane ne soit en contact qu'avec les parois de la fenêtre **42** du voile.

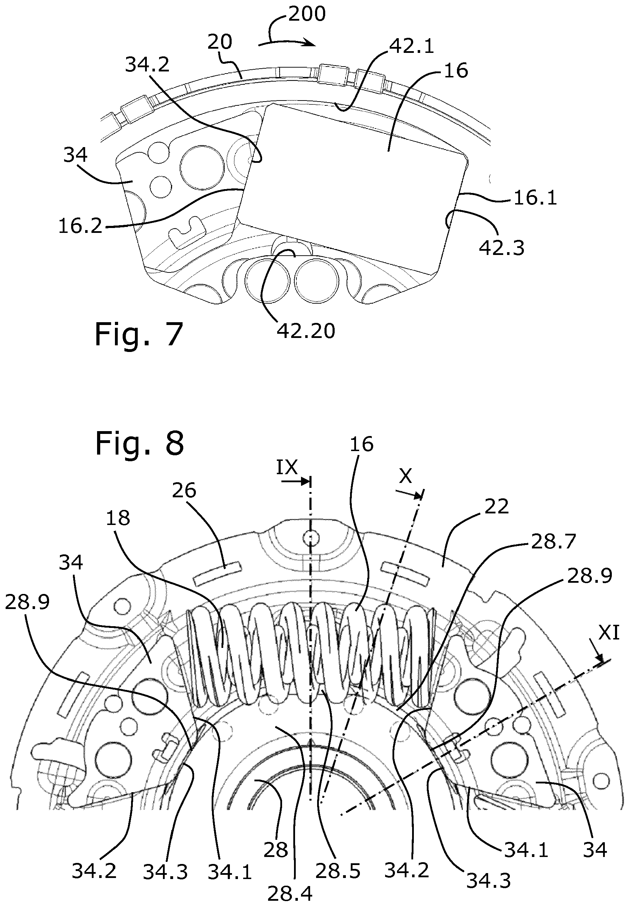

Sur la figure **5** est illustrée une position intermédiaire de transition de l'amortisseur de torsion **10** correspondant à une rotation dans le sens horaire **200** de la rondelle de guidage **20** par rapport au voile **38**. Dans cette position intermédiaire de transition, le ressort principal **16** reste en contact avec la paroi intérieure **42.1** de la fenêtre **42**, le point de contact **I'0** ayant glissé par rapport à la position médiane **I0** le long d'une portion convexe **42.20** de la paroi intérieure **42.2**. Le ressort principal **16** a par ailleurs quatre points de contact: avec la face de butée rétrograde **38.2** (point **I'2**) avec la paroi d'extrémité de la fenêtre dans le sens direct (point **I'2**), et avec la paroi extérieure (points **E1**' et **E2**'). La position de la figure **5** est une position de transition dans la mesure où elle correspond à la limite de décollement entre le ressort **16** et la paroi intérieure **42.2**. Lorsque le couple entre la rondelle de guidage **20** et le voile **38** augmente, et provoque une augmentation de l'angle de rotation de la rondelle de guidage **20** par rapport au voile **38** dans le sens horaire, le ressort principal **16** perd le contact avec la paroi intérieure **42.2** de la fenêtre **42,** comme illustré sur la figure **6**, la position du ressort principal **16** étant alors définie par quatre points de contact avec la face de butée rétrograde (point **I''2**) avec la paroi d'extrémité de la fenêtre dans le sens direct (point **I''1**), et avec la paroi extérieure (points **E1''** et **E2''**). Lorsque le couple continue d'augmenter, la rotation de la rondelle de guidage **20** par rapport au voile **38** se poursuit jusqu'à atteindre la position de fin de course illustrée sur la figure **7**, dans laquelle la face de butée rétrograde **34.2** est parallèle à la paroi d'extrémité **42.3** de la fenêtre **42** dans le sens direct, les spires du ressort principal **16** étant alors jointives ou proche d'être jointives si l'on prévoit une butée de surcouple, les spires d'extrémité **16.1, 16.2** étant en contact plan contre la paroi d'extrémité **42.3** et la face de butée rétrograde **34.2**. Dans cette position, la paroi d'extrémité **42.3** et la face de butée rétrograde **34.2** sont situées de part et d'autre et à égale distance d'un plan radial passant par l'axe de révolution, et parallèles à ce plan radial, ou sensiblement parallèles, à moins de 2° près et de préférence moins de 1° près.

Pour des positions comprises entre la position médiane de référence de la figure **4** et la position de transition de la figure 5, le ressort principal **16** ne fonctionne pas de façon optimale du fait du contact de la portion intermédiaire **16.3** avec la paroi **42.2** de la fenêtre **42.** Ce contact neutralise une partie du ressort, ce qui affecte sa raideur. De plus, le frottement introduit une hystérésis dans le comportement. Mais ces inconvénients sont acceptables, car ils correspondent à une plage de couple faible. Pour les couples plus importants, correspondant aux positions des figures **6** et **7,** le ressort principal se comporte de manière optimale, suivant son axe.

Le ressort auxiliaire **18** n'a pas été dessiné sur les figures **4** à **7.** Comme indiqué précédemment, ce ressort auxiliaire est de préférence plus court à vide que le ressort principal, de manière à ne pas intervenir avant que le ressort principal **16** n'ait été décollé de la paroi intérieure **42.2**. Dans la plage angulaire de fonctionnement entre les figures **4** et **5,** le ressort auxiliaire **18** est coincé à l'intérieur du ressort principal **16** qui est encore courbé. Le ressort auxiliaire **18** devient par contre actif, en parallèle avec le ressort principal **16** dans la plage angulaire de fonctionnement entre les positions des figures **5** et **6.**

Pour les besoins de la présente description, les figures **4** à **7** illustrent des positions statiques du convertisseur, c'est-à-dire en fixant en voile **38**. En dynamique se superposent aux déformations statiques du ressort **16** des déformations dues aux forces centrifuges, qui peuvent notamment ajouter une composante de flexion au ressort principal **16** autour de l'axe de révolution **100,** qui a pour effet de favoriser un décollement plus précoce entre le ressort principal **16** et la paroi intérieure **42.2** de la fenêtre **42,** ce qui est bénéfique pour diminuer l'hystérésis et diminuer la raideur aux faibles couples.

Le comportement de l'amortisseur dans le sens rétrograde est symétrique à celui décrit à l'aide des figures **4** à **7** dans le sens direct.

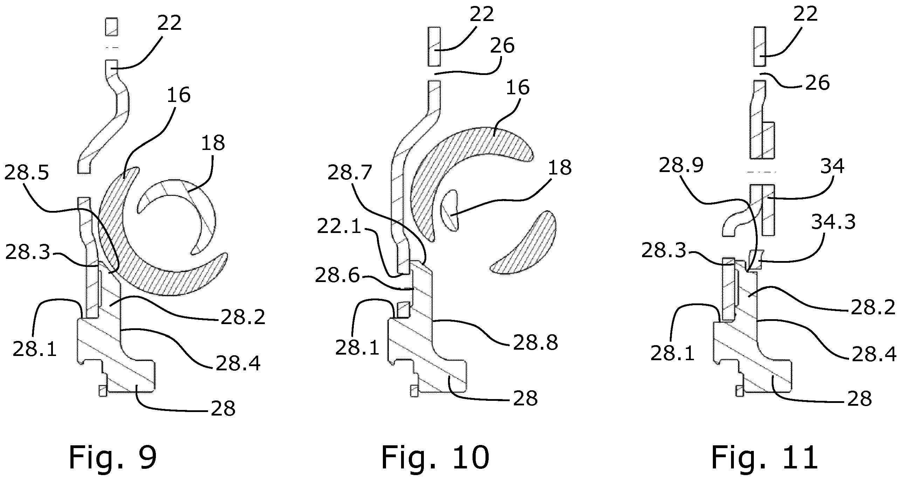

Sur les figures **8** à **11** est illustrée la liaison entre la rondelle de guidage **22** et le moyeu de turbine **28**. Le moyeu de turbine **28** comporte une portée cylindrique de frettage **28.1** et un flasque **28.2** présentant une face tournée **28.3** vers la rondelle de guidage et une face **28.4** tournée à l'opposé de la rondelle de guidage **22,** vers le voile **38**. La face **28.4** présente un rebord dont le profil varie dans les plans de coupe des figures **9, 10** et **11**. Le plan de coupe de la figure **9** est un plan médian de la fenêtre **42,** correspondant à la plus courte distance entre le ressort principal **16** et l'axe de révolution **100**. Dans ce plan, le rebord présente un chanfrein **28.5** suffisant pour permettre le passage du ressort principal **16** sans interférence, ceci afin d'éviter des frottements néfastes qui seraient susceptibles de provoquer à terme des limailles ou des copeaux. Le plan de coupe de la figure **10** passe quant à lui par un trou **22.1** traversant axialement la rondelle de guidage et débouchant sur portion de surface de soudage plane **28.6** et perpendiculaire à l'axe de révolution **100,** prévue sur le flasque **28.2**. Dans ce plan de coupe, le rebord ne comporte qu'un chanfrein limité **28.7,** d'une part parce que le positionnement du ressort principal **16** le permet, et d'autre part parce que cette limitation permet de préserver une portion de surface de contrôle **28.8** au dos de la portion de surface de soudage **28.6.** Le plan de coupe de la figure **11** coupe la butée **34,** et permet de visualiser un méplat **28.9** sur le rebord de la face **28.4,** sur lequel vient se positionner une languette de verrouillage **34.3** prévue à cet effet sur la butée **34.**

Cette disposition permet d'intégrer le moyeu de turbine **28** à l'amortisseur de torsion **10** avant de fixer le moyeu de turbine **28** à la turbine du convertisseur de couple, ce qui permet un assemblage en deux phases distinctes, et le cas échéant en deux lieux distincts. Lors de l'assemblage de l'amortisseur de torsion **10,** le moyeu de turbine **28** est positionné angulairement par rapport à la rondelle de guidage **22,** puis fretté dans la rondelle de guidage **22.** Les butées **34** sont ensuite rivetées à la rondelle de guidage **22,** ce qui verrouille et sécurise la liaison entre moyeu de turbine **28** et rondelle de guidage **22,** à la fois en rotation et en translation. Lors de l'assemblage ultérieur du convertisseur de couple (non représenté) par la gauche sur les figures **9** à **11,** des rivets de fixation sont insérés dans les trous **22.1** et soudés par décharge de condensateur ou tout autre moyen aux portions de surface de soudage **28.6** du flasque **28.2** du moyeu de turbine **28.** Un contrôle de ces soudures peut ensuite être effectué par ultrasons depuis la tête des rivets. Il est important à cet effet que la portion de surface de contrôle **28.8** située dans le prolongement axial des trous **22.1** et dans l'axe des rivets soit plane, parallèle à la portion de surface de soudage **28.6** et non chanfreinée, pour éviter une mauvaise lecture de la mesure de contrôle par ultrasons.

L'exemple représenté sur les figures et discuté ci-dessus est donné à titre illustratif et non limitatif.

Suivant une variante, on peut prévoir que la portée cylindrique **28.1** du moyeu de turbine **28** ne soit pas une portée de frettage, mais puisse être montée avec un jeu fonctionnel dans la rondelle de guidage **22.** Lors de l'assemblage de l'amortisseur de torsion **10,** le moyeu de turbine **28** est inséré et positionné angulairement dans la rondelle de guidage **22.** Les butées **34** sont ensuite rivetées à la rondelle de guidage **22,** ce qui limite le débattement entre le moyeu de turbine **28** et la rondelle de guidage **22,** à la fois en rotation et en translation: les méplats **28.9** sur le rebord de la face **28.4,** coopèrent avec les languettes de verrouillage **34.3** prévues sur les butée **34** pour assurer une indexation angulaire entre le moyeu de turbine **28** et la rondelle de guidage **22,** alors que le flasque **28.2** du moyeu de turbine **28** est retenu axialement entre dans un volume délimité axialement par les butées **34** et la rondelle de guidage **22.** Les méplats **28.9** et les languettes de verrouillage **34.3** forment des reliefs d'indexation.

D'autres variantes sont envisageables. Le nombre de ressorts principaux, de fenêtres et de paires de butées associées est de préférence supérieur ou égal à deux, mais peut augmenter au-delà de trois, notamment si le diamètre de l'amortisseur augmente. Les butées peuvent être formées directement sur le corps des rondelles de guidage ou d'une d'entre elles. L'amortisseur de torsion peut n'avoir qu'une rondelle de guidage. L'entrée de couple peut indifféremment être effectuée par la ou les rondelles de guidage, ou par le voile. On peut le cas échéant prévoir des patins de frottement entre les rondelles de guidage et le voile pour éviter des résonnances de l'amortisseur. L'amortisseur de torsion peut être intégré à différentes positions dans une chaîne cinématique de transmission, par exemple à un double volant amortisseur en amont d'un embrayage sec, ou à un amortisseur à longue course à deux étages avec rondelle de phasage intermédiaire suspendue en rotation par deux jeux de ressorts entre un primaire et un secondaire. Dans cette dernière hypothèse, l'un ou l'autre des deux étages, ou les deux, peuvent être constitués selon l'invention.

**Revendications**

1. Amortisseur de torsion (10) comportant:

    - un voile (38) tournant autour d'un axe de révolution (100) et pourvu d'au moins une fenêtre de logement (42) délimitée par des parois incluant une paroi intérieure (42.2) tournée radialement vers l'extérieur, une paroi extérieure concave (42.1) tournée radialement vers l'intérieur et vers la paroi intérieure et deux parois d'extrémités, respectivement directe et rétrograde (42.3, 42.4) s'étendant radialement entre la paroi intérieure (42.2) et la paroi extérieure (42.1),
    - au moins un ressort principal (16) logé dans la fenêtre (42), le ressort principal (16) comprenant deux portions d'extrémités incluant chacune une spire d'extrémité (16.1, 16.2) et une portion intermédiaire comportant une ou plusieurs spires intermédiaires (16.3), et située entre les portions d'extrémité, et
    - au moins une rondelle de guidage (20, 22) tournant autour de l'axe de révolution (100) par rapport au voile (38) de part et d'autre d'une position angulaire médiane de référence dans un sens direct (200) jusqu'à une position de fin de course directe et un sens rétrograde jusqu'à une position de fin de course rétrograde, la rondelle de guidage (20, 22) étant pourvue d'au moins une face de butée directe (34.1) et d'une face de butée rétrograde (34.2) agencées de telle sorte que lorsque la rondelle de guidage (20, 22) s'éloigne de la position médiane de référence dans le sens direct, le ressort principal (16) est comprimé entre la face de butée rétrograde (34.1) et les parois (42.1, 42.2, 42.3, 42.4) de la fenêtre (42), et que lorsque la rondelle de guidage (20, 22) s'éloigne de la position médiane de référence dans le sens rétrograde, le ressort principal (16) est comprimé entre la face de butée directe (34.1) et les parois (42.1, 42.2, 42.3, 42.4) de la fenêtre (42), ledit amortisseur de torsion étant tel que :

- dans la position de fin de course directe, la paroi d'extrémité directe (42.3) de la fenêtre (42) est parallèle à la face de butée rétrograde (34.2) et le ressort principal (16) est décintré et en appui contre la face de butée rétrograde (34.2) et contre la paroi d'extrémité directe (42.3) de la fenêtre (42),

ledit amortisseur de torsion étant **caractérisé en ce que** :

- le ressort principal (16) est un ressort à boudin droit à vide,
- à l'arrêt, dans la position médiane de référence en l'absence de couple, au moins une des spires intermédiaires (16.3) du ressort principal (16) est en appui radial contre la paroi intérieure (42.2) et le ressort principal (16) est cintré autour de l'axe de révolution (100).

2. Amortisseur de torsion selon la revendication 1, **caractérisé en ce que** le ressort principal (16) est cintré de telle manière que à l'arrêt :

$$1\% \leq \frac{C}{L} \leq 11\%$$

et de préférence :

$$2\% \leq \frac{C}{L} \leq 5\%$$

où:

- L est la longueur d'une corde tirée entre une extrémité radialement intérieure de la spire d'extrémité (16.1) d'une des portions d'extrémité et une extrémité radialement intérieure de la spire d'extrémité (16.2) de l'autre des portions d'extrémité,
- C est la distance, mesurée dans un plan perpendiculaire à l'axe de révolution (100), entre la spire intermédiaire (16.3) en appui radial contre la paroi intérieure (42.2) et la corde.

3. Amortisseur de torsion selon l'une quelconque des revendications précédentes, **caractérisé en ce que** dans la position de fin de course directe, la portion intermédiaire (16.3) du ressort principal (16) n'est en contact ni avec la paroi intérieure (42.2), ni avec la paroi extérieure (42.1) de la fenêtre (42).

4. Amortisseur de torsion selon l'une quelconque des revendications précédentes, **caractérisé en ce qu'**il existe une position de transition dans le sens direct, située entre la position angulaire médiane de référence et la position de fin de course directe, telle que lorsque la rondelle de guidage parcourt une course entre la position de transition et la position de fin de course directe, la portion intermédiaire (16.3) du ressort principal (16) n'est pas en contact avec la paroi intérieure (42.2) de la fenêtre (42), la position de transition dans le sens direct étant située angulairement dans une plage comprise entre 20% et 50% de la course angulaire entre la position angulaire médiane de référence et la position de fin de course directe.

5. Amortisseur de torsion selon l'une quelconque des revendications précédentes, **caractérisé en ce que** dans la position de fin de course directe, la paroi d'extrémité directe (42.3) de la fenêtre (42) et la face de butée rétrograde (34.2) sont situées de part et d'autre et à égale distance d'un plan radial et parallèles ou sensiblement parallèles au plan radial.

6. Amortisseur de torsion selon l'une quelconque des revendications précédentes, **caractérisé en ce que** dans la position médiane de référence, les portions d'extrémité (16.1, 16.2) du ressort principal (16) sont en appui contre la paroi extérieure (42.1) de la fenêtre (42).

7. Amortisseur de torsion selon l'une quelconque des revendications précédentes, **caractérisé en ce que** la paroi extérieure (42.1) de la fenêtre (42) est en arc de cercle centré sur l'axe de révolution (16).

8. Amortisseur de torsion selon l'une quelconque des revendications précédentes, **caractérisé en ce que** les faces d'extrémités directe et rétrograde (42.3, 42.4) de la fenêtre (42) font entre elles un angle de plus de 6°, de préférence de plus de 9°, et de préférence de plus de 12°, mesuré dans un plan perpendiculaire à l'axe de révolution et par rapport à un sommet constitué par l'intersection du plan perpendiculaire à l'axe de révolution (100) avec l'axe de révolution (100).

9. Amortisseur de torsion selon l'une quelconque des revendications précédentes, **caractérisé en ce que** dans la position de fin de course rétrograde, la paroi d'extrémité rétrograde (42.4) de la fenêtre (42) est parallèle à la face de butée directe (34.2) et le ressort principal (16) est décintré et en appui contre la face de butée directe (34.1) et contre la paroi d'extrémité rétrograde (42.4) de la fenêtre (42).

10. Amortisseur de torsion selon l'une quelconque des revendications précédentes, **caractérisé en ce que** dans la position de fin de course rétrograde, la portion intermédiaire (16.3) du ressort principal (16) n'est en contact ni avec la paroi intérieure (42.2) ni avec la paroi extérieure (42.1) de la fenêtre (42).

11. Amortisseur de torsion selon l'une quelconque des revendications précédentes, **caractérisé en ce que** le ressort principal (16) a une longueur à vide L et un diamètre à vide D tels que L/D>2.

12. Amortisseur de torsion selon l'une quelconque des revendications précédentes, **caractérisé en ce qu'**il comprend au moins un ressort auxiliaire (18) à boudin disposé à l'intérieur du ressort principal (16), ayant de préférence un sens d'enroulement inverse du ressort principal (16).

13. Amortisseur de torsion selon l'une quelconque des revendications précédentes, **caractérisé en ce qu'**il comprend des butées (34) solidaires de la rondelle de guidage (20, 22) et sur lesquelles sont formées l'une et/ou l'autre des faces de butée directe (34.1) et de butée rétrograde (34.2).

14. Amortisseur de torsion selon l'une quelconque des revendications précédentes, **caractérisé en ce que** l'amortisseur de torsion (10) comprend un moyeu (28) pourvu d'un flasque (28.2), le flasque (28.2) comportant un rebord périphérique, une portion du rebord périphérique (28.5) étant positionnée entre la portion intermédiaire (16.3) du ressort principal (16) et la rondelle de guidage (22), ladite portion (28.5) du rebord périphérique du flasque (28.2) étant chanfreinée de façon à ne pas avoir de contact avec le ressort principal (16).

15. Amortisseur de torsion selon la revendication 14, **caractérisé en ce que** la rondelle de guidage (22) est pourvue de trous de fixation (22.1) parallèles à l'axe de révolution (100) et répartis circonférentiellement pour le passage de rivets de fixation entre le flasque (28.2), la rondelle de guidage (22) et une turbine d'entraînement de la rondelle de guidage (22), le flasque (28.2) présentant une face (28.3) tournée vers la rondelle de guidage (22), qui comporte des portions planes de soudage (28.6) perpendiculaires à l'axe de révolution (100) en regard de chacun des trous de fixation (22.1) et une face (28.4) opposée à la rondelle de guidage (22), qui comporte des portions planes de contrôle (28.8) perpendiculaires à l'axe de révolution (100), dans le prolongement axial du trou de fixation (22.1) et des portions planes de soudage (28.6).

**Patentansprüche**

1. Torsionsdämpfer (10), welcher aufweist:

- eine Abdeckung (38), die sich um eine Drehachse (100) dreht und mit wenigstens einem Aufnahmefenster (42) versehen ist, das von Wänden begrenzt wird, nämlich einer inneren Wand (42.2), die radial nach außen gewandt ist, einer konkaven äußeren Wand (42.1), die radial nach innen und zu der inneren Wand hin gewandt ist, und zwei vorwärts bzw. rückwärts gerichteten Endwänden (42.3, 42.4), die sich radial zwischen der inneren Wand (42.2) und der äußeren Wand (42.1) erstrecken,
- wenigstens eine Hauptfeder (16), die in dem Fenster (42) aufgenommen ist, wobei die Hauptfeder (16) zwei Endabschnitte, die jeweils eine Endwindung (16.1, 16.2) aufweisen, und einen Zwischenabschnitt, der eine oder mehrere Zwischenwindungen (16.3) aufweist und sich zwischen den Endabschnitten befindet, umfasst, und
- wenigstens eine Führungsscheibe (20, 22), die sich in Bezug auf die Abdeckung (38) von einer mittleren Referenzwinkelposition aus nach beiden Seiten um die Drehachse (100) in einer Vorwärtsrichtung (200) bis zu einer Vorwärts-Endlage und in einer Rückwärtsrichtung bis zu einer Rückwärts-Endlage dreht, wobei die Führungsscheibe (20, 22) mit wenigstens einer Vorwärts-Anschlagfläche (34.1) und einer Rückwärts-Anschlagfläche (34.2) versehen ist, die derart angeordnet sind, dass, wenn sich die Führungsscheibe (20, 22) in der Vorwärtsrichtung von der mittleren Referenzposition entfernt, die Hauptfeder (16) zwischen der Rückwärts-Anschlagfläche (34.1) und den Wänden (42.1, 42.2, 42.3, 42.4) des Fensters (42) zusammengedrückt wird, und dass, wenn sich die Führungsscheibe (20, 22) in der Rückwärtsrichtung von der mittleren Referenzposition entfernt, die Hauptfeder (16) zwischen der Vorwärts-Anschlagfläche (34.1) und den Wänden (42.1, 42.2, 42.3, 42.4) des Fensters (42) zusammengedrückt wird,

wobei der Torsionsdämpfer derart beschaffen ist, dass:

- in der Vorwärts-Endlage die vorwärts gerichtete Endwand (42.3) des Fensters (42) parallel zu der Rückwärts-Anschlagfläche (34.2) ist und die Hauptfeder (16) nicht gebogen ist und an der Rückwärts-Anschlagfläche (34.2) und an der vorwärts gerichteten Endwand (42.3) des Fensters (42) anliegt,

wobei der Torsionsdämpfer **dadurch gekennzeichnet ist, dass**:

- die Hauptfeder (16) eine im unbelasteten Zustand gerade Schraubenfeder ist,

- im Stillstand, in der mittleren Referenzposition bei Nichtvorhandensein eines Drehmoment, wenigstens eine der Zwischenwindungen (16.3) der Hauptfeder (16) radial an der inneren Wand (42.2) anliegt und die Hautfeder (16) um die Drehachse (100) gebogen ist.

2. Torsionsdämpfer nach Anspruch 1, **dadurch gekennzeichnet, dass** die Hauptfeder (16) derart gebogen ist, dass im Stillstand

$$1 \ \% \ \leq \ \frac{C}{L} \ \leq \ 11 \ \%$$

und vorzugsweise

$$2 \ \% \ \leq \ \frac{C}{L} \ \leq \ 5 \ \%$$

gilt, wobei

- L die Länge einer Sehne ist, die zwischen einem radial inneren Ende der Endwindung (16.1) eines der Endabschnitte und einem radial inneren Ende der Endwindung (16.2) des anderen Endanschnitts verläuft,
- C der in einer zur Drehachse (100) senkrechten Ebene gemessene Abstand zwischen der Zwischenwindung (16.3), die radial an der inneren Wand (42.2) anliegt, und der Sehne ist.

3. Torsionsdämpfer nach einem der vorhergehenden Ansprüche, **dadurch gekennzeichnet, dass** sich in der Vorwärts-Endlage der Zwischenabschnitt (16.3) der Hauptfeder (16) weder mit der inneren Wand (42.2) noch mit der äußeren Wand (42.1) des Fensters (42) in Kontakt befindet.

4. Torsionsdämpfer nach einem der vorhergehenden Ansprüche, **dadurch gekennzeichnet, dass** eine Übergangsposition in der Vorwärtsrichtung existiert, die sich zwischen der mittleren Referenzwinkelposition und der Vorwärts-Endlage befindet, derart, dass, wenn die Führungsscheibe einen Weg zwischen der Übergangsposition und der Vorwärts-Endlage zurücklegt, der Zwischenabschnitt (16.3) der Hauptfeder (16) sich nicht in Kontakt mit der inneren Wand (42.2) des Fensters (42) befindet, wobei sich die Übergangsposition in der Vorwärtsrichtung in einem Winkelbereich zwischen 20 % und 50 % des Winkelweges zwischen der mittleren Referenzwinkelposition und der Vorwärts-Endlage befindet.

5. Torsionsdämpfer nach einem der vorhergehenden Ansprüche, **dadurch gekennzeichnet, dass** sich in der Vorwärts-Endlage die vorwärts gerichtete Endwand (42.3) des Fensters (42) und die Rückwärts-Anschlagfläche (34.2) auf verschiedenen Seiten einer radialen Ebene und im gleichen Abstand von dieser befinden und parallel oder im Wesentlichen parallel zu der radialen Ebene sind.

6. Torsionsdämpfer nach einem der vorhergehenden Ansprüche, **dadurch gekennzeichnet, dass** in der mittleren Referenzposition die Endabschnitte (16.1, 16.2) der Hauptfeder (16) an der äußeren Wand (42.1) des Fensters (42) anliegen.

7. Torsionsdämpfer nach einem der vorhergehenden Ansprüche, **dadurch gekennzeichnet, dass** die äußeren Wand (42.1) des Fensters (42) die Form eines bezüglich der Drehachse (16) zentrierten Kreisbogens hat.

8. Torsionsdämpfer nach einem der vorhergehenden Ansprüche, **dadurch gekennzeichnet, dass** die vorwärts und die rückwärts gerichtete Endfläche (42.3, 42.4) des Fensters (42) miteinander einen Winkel von mehr als 6°, vorzugsweise von mehr als 9° und vorzugsweise von mehr als 12° bilden, gemessen in einer zur Drehachse senkrechten Ebene und in Bezug auf einen Scheitel des Winkels, der vom Schnittpunkt der zur Drehachse (100) senkrechten Ebene mit der Drehachse (100) gebildet wird.

9. Torsionsdämpfer nach einem der vorhergehenden Ansprüche, **dadurch gekennzeichnet, dass** in der Rückwärts-Endlage die rückwärts gerichtete Endwand (42.4) des Fensters (42) parallel zu der Vorwärts-Anschlagfläche (34.2) ist und die Hauptfeder (16) nicht gebogen ist und an der Vorwärts-Anschlagfläche (34.1) und an der rückwärts gerichteten Endwand (42.4) des Fensters (42) anliegt.

10. Torsionsdämpfer nach einem der vorhergehenden Ansprüche, **dadurch gekennzeichnet, dass** sich in der Rückwärts-Endlage der Zwischenabschnitt (16.3) der Hauptfeder (16) weder mit der inneren Wand (42.2) noch mit der äußeren Wand (42.1) des Fensters (42) in Kontakt befindet.

11. Torsionsdämpfer nach einem der vorhergehenden Ansprüche, **dadurch gekennzeichnet, dass** die Hauptfeder (16) eine solche freie Länge L und einen solchen Durchmesser im unbelasteten Zustand D aufweist, dass L/D > 2 ist.

12. Torsionsdämpfer nach einem der vorhergehenden Ansprüche, **dadurch gekennzeichnet, dass** sie wenigstens eine Hilfs-Schraubenfeder (18) umfasst, die im Inneren der Hauptfeder (16) angeordnet ist und vorzugsweise ein Windungsrichtung aufweist, die entgegengesetzt zu derjenigen der Hauptfeder (16) ist.

**13.** Torsionsdämpfer nach einem der vorhergehenden Ansprüche, **dadurch gekennzeichnet, dass** sie Anschläge (34) umfasst, die mit der Führungsscheibe (20, 22) fest verbunden sind und auf denen die Vorwärts-Anschlagfläche (34.1) und/oder die Rückwärts-Anschlagfläche (34.2) ausgebildet sind.

**14.** Torsionsdämpfer nach einem der vorhergehenden Ansprüche, **dadurch gekennzeichnet, dass** der Torsionsdämpfer (10) eine Nabe (28) umfasst, die mit einem Flansch (28.2) versehen ist, wobei der Flansch (28.2) einen Umfangsrand aufweist, wobei ein Abschnitt des Umfangsrandes (28.5) zwischen dem Zwischenabschnitt (16.3) der Hauptfeder (16) und der Führungsscheibe (22) positioniert ist, wobei der Abschnitt (28.5) des Umfangsrandes des Flansches (28.2) abgefast ist, so dass er keinen Kontakt mit der Hauptfeder (16) hat.

**15.** Torsionsdämpfer nach Anspruch 14, **dadurch gekennzeichnet, dass** die Führungsscheibe (22) mit Befestigungslöchern (22.1) versehen ist, die zur Drehachse (100) parallel sind und in Umfangsrichtung verteilt sind, zum Durchgang von Befestigungsnieten zwischen dem Flansch (28.2), der Führungsscheibe (22) und einer Antriebsturbine der Führungsscheibe (22), wobei der Flansch (28.2) eine der Führungsscheibe (22) zugewandte Fläche (28.3) aufweist, welche zur Drehachse (100) senkrechte ebene Schweißabschnitte (28.6) gegenüber jedem der Befestigungslöcher (22.1) aufweist, und eine von der Führungsscheibe (22) abgewandte Fläche (28.4), welche zur Drehachse (100) senkrechte ebene Kontrollabschnitte (28.8) in der axialen Verlängerung des Befestigungsloches (22.1) und der ebenen Schweißabschnitte (28.6) aufweist.

**Claims**

**1.** Torsion damper (10) comprising:

- a disc (38) rotating about an axis of revolution (100) and provided with at least one housing opening (42) delimited by walls including an interior wall (42.2) facing radially towards the outside, a concave exterior wall (42.1) facing radially towards the inside and towards the interior wall and two end walls, these respectively being a direct and a backwards end wall (42.3, 42.4) extending radially between the interior wall (42.2) and the exterior wall (42.1),
- at least one main spring (16) housed in the opening (42), the main spring (16) comprising two end portions each including an end turn (16.1, 16.2) and an intermediate portion comprising one or more intermediate turns (16.3) and situated between the end portions, and
- at least one guide washer (20, 22) rotating about the axis of revolution (100) with respect to the disc (38) on each side of a median reference angular position in a direct direction (200) as far as an end-of-direct-travel position and a backwards direction as far as an end-of-backwards-travel position, the guide washer (20, 22) being provided with at least one direct abutment face (34.1) and with a backwards abutment face (34.2) which faces are arranged in such a way that when the guide washer (20, 22) moves away from the median reference position in the direct direction, the main spring (16) is compressed between the backwards abutment face (34.1) and the walls (42.1, 42.2, 42.3, 42.4) of the opening (42), and when the guide washer (20, 22) moves away from the median reference position in the backwards direction, the main spring (16) is compressed between the direct abutment face (34.1) and the walls (42.1, 42.2, 42.3, 42.4) of the opening (42), the said torsion damper being such that:
- in the end-of-direct-travel position, the direct end wall (42.3) of the opening (42) is parallel to the backwards abutment face (34.2) and the main spring (16) is unbent and bears against the backwards abutment face (34.2) and against the direct end wall (42.3) of the opening (42),

the said torsion damper being **characterized in that**:

- the main spring (16) is a coil spring which is straight when unloaded,
- when stationary, in the median reference position in the absence of torque, at least one of the intermediate turns (16.3) of the main spring (16) bears radially against the interior wall (42.2) and the main spring (16) is bent about the axis of revolution (100).

**2.** Torsion damper according to Claim 1, **characterized in that** the main spring (16) is bent in such a way that when stationary:

$$1\% \leq \frac{C}{L} \leq 11\%$$

and preferably:

$$2\% \leq \frac{C}{L} \leq 5\%$$

where:

- L is the length of a chord drawn between a radially interior end of the end turn (16.1) of one of the end portions and a radially interior end of the end turn (16.2) of the other of the end portions,

- C is the distance, measured in a plane perpendicular to the axis of revolution (100), between the intermediate turn (16.3) bearing radially against the interior wall (42.2) and the chord.

3. Torsion damper according to either one of the preceding claims, **characterized in that**, in the end-of-direct-travel position, the intermediate portion (16.3) of the main spring (16) is in contact neither with the interior wall (42.2) nor with the exterior wall (42.1) of the opening (42).

4. Torsion damper according to any one of the preceding claims, **characterized in that** there is a transition position in the direct direction, situated between the median reference angular position and the end-of-direct-travel position, which is such that when the guide washer travels between the transition position and the end-of-direct-travel position, the intermediate portion (16.3) of the main spring (16) is not in contact with the interior wall (42.2) of the opening (42), the transition position in the direct direction being situated angularly in a range comprised between 20% and 50% of the angular travel between the median reference angular position and the end-of-direct-travel position.

5. Torsion damper according to any one of the preceding claims, **characterized in that**, in the end-of-direct-travel position, the direct end wall (42.3) of the opening (42) and the backwards abutment face (34.2) are situated one on either side of and equal distances away from a radial plane and parallel or substantially parallel to the radial plane.

6. Torsion damper according to any one of the preceding claims, **characterized in that** in the median reference position, the end portions (16.1, 16.2) of the main spring (16) bear against the exterior wall (42.1) of the opening (42).

7. Torsion damper according to any one of the preceding claims, **characterized in that** the exterior wall (42.1) of the opening (42) is shaped as an arc of a circle centred on the axis of revolution (16).

8. Torsion damper according to any one of the preceding claims, **characterized in that** the direct and backwards end faces (42.3, 42.4) of the opening (42) make between them an angle of more than 6°, preferably more than 9°, and preferably more than 12°, measured in a plane perpendicular to the axis of revolution and with respect to a vertex formed by the intersection of the plane perpendicular to the axis of revolution (100) and the axis of revolution (100).

9. Torsion damper according to any one of the preceding claims, **characterized in that** in the end-of-backwards-travel position, the backwards end wall (42.4) of the opening (42) is parallel to the direct abutment face (34.2) and the main spring (16) is unbent and bearing against the direct abutment face (34.1) and against the backwards end wall (42.4) of the opening (42).

10. Torsion damper according to any one of the preceding claims, **characterized in that** in the end-of-backwards-travel position, the intermediate portion (16.3) of the main spring (16) is in contact neither with the interior wall (42.2) nor with the exterior wall (42.1) of the opening (42).

11. Torsion damper according to any one of the preceding claims, **characterized in that** the main spring (16) has an unladen length L and an unladen diameter D such that L/D > 2.

12. Torsion damper according to any one of the preceding claims, **characterized in that** it comprises at least one auxiliary coil spring (18) arranged inside the main spring (16), and preferably wound in the opposite direction to the main spring (16).

13. Torsion damper according to any one of the preceding claims, **characterized in that** it comprises abutments (34) secured to the guide washer (20, 22) and on which one and/or the other of the direct abutment face (34.1) and backwards abutment face (34.2) are formed.

14. Torsion damper according to any one of the preceding claims, **characterized in that** the torsion damper (10) comprises a hub (28) provided with a flange (28.2), the flange (28.2) comprising a peripheral rim, a portion of the peripheral rim (28.5) being positioned between the intermediate portion (16.3) of the main spring (16) and the guide washer (22), the said portion (28.5) of the peripheral rim of the flange (28.2) being chamfered so that it does not come into contact with the main spring (16).

15. Torsion damper according to Claim 14, **characterized in that** the guide washer (22) is provided with fixing holes (22.1) parallel to the axis of revolution (100) and distributed circumferentially for the passage of fixing rivets for joining together the flange (28.2), the guide washer (22) and a turbine that drives the guide washer (22), the flange (28.2) having, facing towards the guide washer (22), a face (28.3) that comprises welding flats (28.6) perpendicular to the axis of revolution (100) facing each of the fixing holes (22.1) and an opposite face (28.4) to the guide washer (22), which comprises flat control portions (28.8) perpendicular to the axis of revolution (100), in the axial continuation of the fixing hole (22.1) and of the welding flats (28.6).

Fig. 1

Fig. 3

Fig. 2

EP 3 250 842 B1

Fig. 4

Fig. 5

Fig. 6

Fig. 7

Fig. 8

Fig. 11

Fig. 10

Fig. 9

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2652399
- FR 2757586
- FR 2885195